# EUROPEAN PATENT APPLICATION

(11) **EP 4 506 137 A1**
(43) Date of publication of application: **12.02.2025**
(21) Application number: 24192707.8
(22) Date of filing: 02.08.2024
(51) Int. Cl.: B29C 45/28, B29C 45/30, B29C 45/27

(54) **METHOD AND COMPONENT FOR INJECTION MOLDING**

(30) Priority: 09.08.2023 IT 202300017013
(71) Applicant: Inglass S.p.A., 31020 San Polo di Piave (Treviso) (IT)
(72) Inventor: Bisetto, Massimo, 31020 San Polo di Piave (TV) (IT); BISCARO, Enrico, 31020 San Polo di Piave (TV) (IT); DALL'ACQUA, Claudio, 31020 San Polo di Piave (TV) (IT)
(74) Representative: Citron, Massimiliano

(57) **Abstract**

A method is described for conveying a flow of melt material into an injection molding apparatus from an outlet of a feed channel to an inlet of an injection channel, wherein the inlet and outlet are joined to each other by an elbow-shaped joining channel, the injection channel leads to an injection nozzle for injection towards a mold cavity, and a nozzle shutter crosses the joining channel in front of said outlet and coaxially crosses the injection channel.

To reduce material stagnation, there is the step of diverting the flow of material, while it passes through the feed channel and before it arrives in the joining channel, in a direction opposite or contrary to the inlet of the injection channel so as to push at least a fraction of the material entering the joining channel towards a target area of the joining channel located behind the shutter.

## Description

The present invention concerns an injection molding method, a component of an injection molding apparatus and the apparatus comprising the component.

For example from WO2021198950A1 the problem is known of the differential or gradient of velocity that arises in molten material when it passes from the feed channel (CA) to the injection channel (CI), see p. 2 lines 3-27. Substantially, in the joining channel between the CA and the CI the flow coming from the CA collides with the shutter and is forced to travel along two paths: one, direct, along the "front" of the shutter and the other on the "back" of the same. The paths have different geometries, so they are characterized by different pressure drops and, consequently, by a different feed speed along the CI.

The portion of the flow that impacts the shutter and deviates down the CI in front of the shutter experiences less pressure drop, so it is faster. The portion of the flow that impacts the shutter and bypasses it is forced to take a longer path and is slowed down.

Since the fluid on the back of the shutter is slower, zones of stagnation of the material are created here, in which the material remains for several molding cycles. The stagnation generates defects on the molded parts during the color change operations (when the color of the injected polymer is changed).

Since the waste pieces can be very numerous with consequent expenditure of raw material (especially with large molded parts), energy and time, then it is necessary to clean the joining channel promptly and quickly to limit the contamination of the molded pieces caused by residues of previous material.

The main object of the invention, defined in the attached claims in which the dependent ones define advantageous variants, is to improve this state of the art.

Another object of the invention is to improve molding efficiency, in particular by reducing the number of necessary throw-away injection shots needed to perform color change on injection molding systems.

A further object is to uniform the velocity and the thermal field of the flow of the fluid material injected inside the injector, thus ensuring greater radial uniformity at the exit of the gate or injector.

The invention is applied to an injection molding apparatus comprising a manifold provided with
- a feed channel for molten material with an outlet for the molten material,
- an injection channel, provided with an inlet for molten material and configured to conduct the molten material from the inlet toward a nozzle for injection into a mold cavity,
   wherein the inlet of the injection channel and the outlet of the feed channel are joined to each other by an elbow-shaped joining channel;
- a nozzle shutter mounted to cross the joining channel in front of the outlet and cross coaxially the injection channel.

The behaviour of the plastic material in the apparatus is improved by the step of
conveying a flow of molten material from the outlet of the feed channel to the inlet of the injection channel
by diverting the flow of material, while it travels in the feed channel and before it arrives in the joining channel, in the opposite or contrary direction to the inlet of the injection channel
so as to push at least a fraction of the material entering the joining channel towards a target zone of the joining channel located behind the shutter.

By convention in this text the relative term "behind" (and synonyms) referring to the shutter must be considered with respect to the entry direction of the material into the joining channel.

The effect of the deviation is to orient a portion of the material entering the joining channel towards, and/or generate in the material entering the joining channel a displacement/velocity component directed towards, said target zone.

The flow of material thus diverted stresses the material that stagnates in the target zone and reduces the residues that remain there.

Another advantageous effect of the deviation is to facilitate the circumventing of the shutter by the material entering the joining channel, thereby limiting the slowdown caused by the bulk of the shutter.

In a preferred variant of the method, with the advantage of maximising said displacement/velocity component, in said step the flow is diverted at or near the outlet or exit of the feed channel into the joining channel, in particular only at or near the outlet or exit of the feed channel into the joining channel.

In a preferred variant of the method, simple to implement, in said step the material flow is diverted by gradually or abruptly reducing the cross-section of the feed channel, in particular by tapering the feed channel.

In a preferred variant, the feed channel at the outlet or exit inside the joining channel has a transverse cross-section (intended e.g. as cross-section with respect to a section plane orthogonal to the axis of the feed channel) with a profile composed of
- a first terminal portion, adjacent to the inlet of the injection channel, and
- a second terminal portion, diametrically opposite to the first and further from the inlet of the injection channel.

In a more preferred variant, to obtain said deviation the cross-section of the feed channel is reduced or tapered by progressively narrowing the cross-section of the feed channel only at the section leading to the first terminal portion, leaving constant the cross-section of the feed channel at the section leading to the second terminal portion.

The first terminal portion is relative to the outlet of the feed channel where the radius of curvature of the joining channel is smaller.

In a preferred variant of the method, simple to implement, in said step the material flow is diverted by placing an obstacle in the feed channel.

In a preferred variant of the method, as the material travels through the feed channel and before it enters the joining channel, two flows are created in the material flow which are divergent and directed respectively toward opposite sides of the shutter that are located inside the joining channel.

Thus the action of flowing around the shutter by the flow of material is favoured, limiting the portion of flow of material that arriving from the feed channel bumps frontally against the shutter. The effect is that the stagnation of material in the joining channel decreases. Therefore, it is possible to limit the flow-rate of material in the front zone of the shutter (the one facing the outlet of the feed channel), where the material hits the shutter, while increasing the flow-rate thereof at the sides of the shutter. Then a greater quantity of fluid material, which has retained its speed because it has bypassed the shutter almost without touching it, ends up on the back of the shutter. That is, a part of fluid that in the prior art bumped against the shutter is now deflected and manages to arrive with more speed behind the shutter, a zone in which a washing and dragging action develops that takes away material residues since the local speed of the material has increased.

In a preferred variant of the method, the flow of material is diverted and said flows are created simultaneously in a same portion of the feed channel.

In a preferred variant of the method, simple to implement, said flows are created by an obstacle to the flow.

Another aspect of the invention is a component of a said injection molding apparatus. The component comprises:
- a joining channel with elbow-shaped development and provided with a joining inlet and a joining outlet,
- a pass-through cavity which communicates with the joining channel and is adapted to accommodate the shutter in translatable manner,
   wherein the component is mounted so that
   the joining inlet joins with the feed channel to receive molten material from it and
   the joining outlet joins with the inlet of the injection channel to convey molten material there,
- means or a member for diverting a flow of material, which has entered the component from the joining inlet, in opposite or contrary direction to the joining outlet, so as to push at least a fraction of the material entering the joining channel towards a target zone of the joining channel located behind the shutter.

In a preferred variant, the joining channel comprises, with respect to the flowing direction of the material, an initial section that
- extends from the joining inlet toward the inside of the component,
- is configured to linearly convey a portion of the material along a central longitudinal axis of the initial section, and
- connects by means of a curved elbow-shaped section.

Preferably said means or member are placed at or near the initial section, or are only placed at or near the initial section.

In a preferred variant, said means or member comprise or consist of an obstacle to the flow of material, wherein the obstacle is configured to divert the material as defined above.

In a preferred variant, said means or member comprise or consist of a reduction of the cross-section of the initial section towards the inside of the component.

In a preferred variant, an inner wall of the initial section comprises an inclined plane, or ramp, inclined with respect to the central longitudinal axis, wherein the inclined plane or ramp develops to narrow the cross-section of the initial section as the initial section develops toward the inside of the component so as to divert a flow of material toward a curved wall opposite the joining channel.

In a preferred variant, the initial section at its portion joining with the joining section has a cross-section (intended e.g. as cross-section with respect to a cross-section plane orthogonal to the central longitudinal axis) with a profile composed of
- a first final portion, adjacent to the inlet of the injection channel, and
- a second final portion, diametrically opposite to the first and further from the inlet of the injection channel.

Preferably said means or member comprise or consist of a reduction of the cross-section of the initial section only at the section leading to the first final portion, the cross-section of the joining channel remaining constant for the section leading to the second final portion.

For ease of construction, said obstacle, or an inner wall of the initial section, may comprise an inclined plane, or a ramp, inclined with respect to a central longitudinal axis of the initial section, wherein the inclined plane or ramp develops
to narrow the cross-section of the initial section as the initial section develops toward the inside of the component and
to divert the flow of material toward the periphery of the joining channel, or toward an opposite curved wall of the joining channel, that extends in front of the outlet of the initial section into the joining channel, and/or toward said target zone.

In particular, the inclined plane or ramp are placed at the first final portion.

In a preferred variant, said means or member are configured to create in the material two flows which are divergent and directed respectively towards opposite sides of the shutter located within the joining channel, or towards opposite zones of the joining channel.

In particular, said means or member comprises two substantially diverging grooves or ruts extending inside the initial section from the joining inlet toward the inside of the component. More specifically, said grooves or ruts develop at the sides of said inclined plane or ramp.

Another aspect of the invention is a said molding apparatus for injection of molten material, in which the joining channel has elbow-shaped development, and is
- provided with a joining inlet and a joining outlet, and
- communicating with a pass-through cavity adapted to accommodate the shutter in a translatable way,

wherein the joining inlet is joined with the feed channel to receive molten material and the joining outlet is joined with the inlet of the injection channel to convey molten material there,
the apparatus further comprising means or a member for diverting a flow of material, arriving from the feed channel and before it has entered the joining channel, in the opposite or contrary direction to the joining outlet, so as to push at least a fraction of the material entering the joining channel towards a target zone of the joining channel located behind the shutter.

The apparatus shares all the variants defined for the component.

In a preferred variant of the various aspects of the invention:
- the passage cross-sections of the material in the joining channel in front of and behind the shutter are equal to each other; and/or
- the joining channel curves by 90 degrees and/or imposes a 90 degree change of direction on the material passing from the feed channel to the injection channel; and/or
- said obstacle has the shape of a fin, tab, prism, pyramid, cone, ramp, a portion thereof or a combination thereof; and/or
- the target zone is a curved wall of the joining channel located in front of the outlet of the feed channel, and/or a volume of the joining channel located in front of said curved wall and behind the shutter.

Usually, the injection channel develops inside an injector.

The invention may be used in hot or cold runner systems.

The dependent claims define preferred embodiments of the invention.

Further features and advantages of the invention will be most evident from the following description of preferred embodiments of an injection molding apparatus, in which:
- Fig. 1 shows a schematic cross-section of an injection apparatus;
- Fig. 2 shows a three-dimensional view of a component of the apparatus of fig. 1;

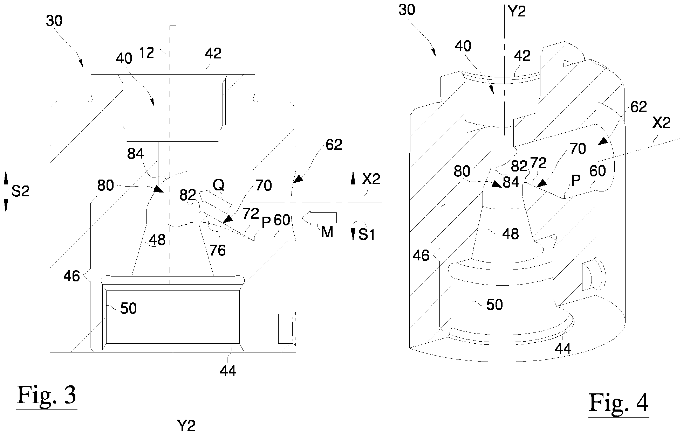

- Fig. 3 shows a cross-sectional view according to plane III-III of fig. 2;
- Fig. 4 shows a three-dimensional view of the cross-sectioned component of fig. 3;

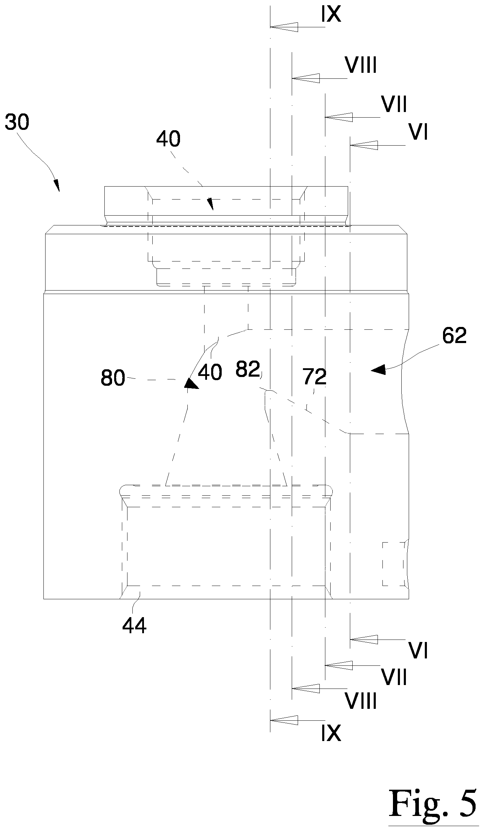

- Fig. 5 shows a side view of the component in fig. 2;
- Figs. 6-9 show a cross-sectional view according to the plane VI-VI, VII-VII, VIII-VIII and IX-IX of fig. 5 respectively.

In the figures equal elements are indicated by equal numbers, and in order not to crowd the drawings sometimes only some numbers are reported.

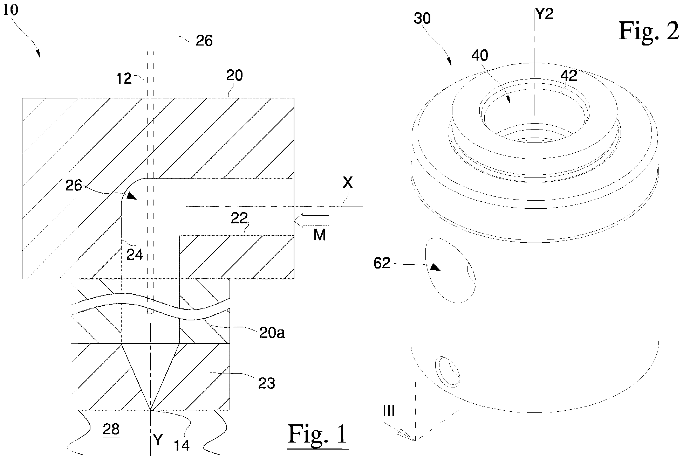

Fig. 1 shows a very general and essential diagram of an injection molding apparatus 10 which comprises a manifold or hot runner 20, internally provided with one or more feed channels 22, with X axis, inside which the molten plastic material is pushed by a press (indicated by an arrow M).

Each feed channel 22 joins with an injection channel 24 via a joining channel 26.

In particular, the initial part of the injection channel 24 is made to extend in an injector 20a fixed to the manifold 20. The end of the injection channel 24 may comprise appropriate nozzle tips 23.

For simplicity, only two channels of the manifold 20 are shown in the Figures.

The injection channel 24, with Y axis, is crossed coaxially by a known shutter 12 (shown only schematically), used to open or close an injection nozzle 14 provided at the end of the injection channel 24. The shutter 12 is movable by means of a known actuator 26 from an opening position of the nozzle 14 to a closed position of the nozzle 14, and vice versa, in order to regulate the flow of material toward a cavity 28 of the mold.

A preferred embodiment of a flow-diverting component, configured to divert the flow of material, is shown in fig. 2 and indicated by 30.

The component 30 has a substantially cylindrical shape with Y2 axis, and is internally provided with a joining channel. The joining channel comprises:
a first channel 40, which passes through and crosses its thickness axially, and
a second channel 60, with axis X2, which joins to the first channel 40 at a junction zone 80 at about the center of component 30.

The first channel 40 has an inlet 42 on the upper base of the component 30 and an outlet 44 on the lower base of the component 30, while the second channel 60 has an inlet 62 on the side surface of the component 30.

The component 30 is installed in the manifold 20 to occupy the joining channel 26, and so that
the X2 axis coincides with the X axis,
the Y2 axis coincides with the Y axis,
the inlet 62 collimates with the feed channel 22 and
the outlet 44 collimates with the injection channel 24.

The axes X2 and Y2 are preferably orthogonal to each other, for production and assembly issues. The X and Y axes are also preferably orthogonal to each other. The shutter 12 is slidably inserted inside the first channel 40, coaxially to the Y2 axis.

Therefore, in general, the material coming from the feed channel 22 enters the inlet 62, travels through the second channel 60, reaches the junction zone 80, travels through the first channel 40, exits the outlet 44 and enters the injection channel 24.

More precisely, when the material leaves the junction zone 80 to reach the outlet 44 occupies, and flows through, only a portion 46 of the first channel 40, the one that extends between the junction zone 80 and the outlet 44.

In proximity of the junction zone 80, preferably the portion 46 comprises a channel 48 with linearly increasing cross-section that flows into a channel 50 having a cross-section which is approximately constant and greater than the maximum cross-section of the channel 48. The channel 50 constitutes a seat where an injector can be screwed into.

To improve the dynamic behaviour of the material, in the second channel 60 there is a flow-diverting means or member 70.

The member or means 70 is configured to generate in the material a displacement/speed component - see arrow Q - directed towards a curved wall 84 of the junction zone 80 which is diametrically opposite to the inlet of the junction zone 80 (in front of the cross-section S2). That is, the curved wall 84 is the portion of the junction zone 80 which is right in front of the outlet of the channel 60 inside the junction zone 80.

In this way, the flow of material exiting the second channel 60 is diverted towards the center of the second channel 60, which deflects the material towards the curve wall 84 and towards the zone behind the shutter 12. Then, in the volume of the junction zone 80 next to the curved wall 84 the material flows faster and with less risk of generating residues.

In other words, the member or means 70 not only prevents some of the material coming from the second channel 60 from bumping against the shutter 12, so that the material is forced to bypass more smoothly the shutter 12 with less pressure drop, but at the same time keeps the speed of the material in the zone in front and behind the shutter 12 more uniform. In addition, the member or means 70 directs a greater quantity of material towards the zone 84 favouring a fast and effective washing thereof.

Preferably, for ease of construction, said member or means 70 comprises or consists of a reduction of the cross-section of the second channel 60 towards the junction zone 80.

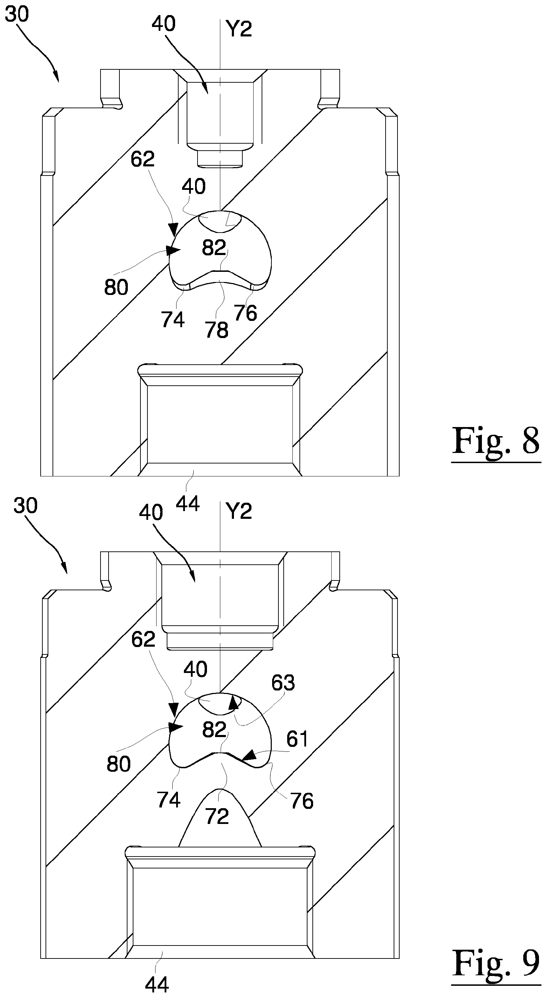

In particular, the second channel 60, at its connection with the junction zone 80, has a cross-section (intended for example as a cross-section with respect to a plane of cross-section orthogonal to axis X2) with a profile (see fig. 8) composed of
a first final portion 61, adjacent to the portion 46, and
a second final portion 63, diametrically opposed to the first portion 61 and further from the portion 46.

According to a preferred embodiment, the second channel 60 has a progressively reduced cross-section only at the section leading to the first final portion 61, the cross-section of the channel 60 remaining constant for the section leading to the second final portion 63.

Preferably, for ease of construction, said means or member 70 is made in the form of a ramp 72 configured to tape the cross-section of the second channel 60 towards the junction zone 80.

The ramp 72 extends cantilevered from a front P of the inner surface of the second channel 60 toward the Y2 axis with an inclination with respect to axis Y2, and extends towards the junction zone 80 to end at an edge or apex 82 which bounds the beginning of the junction zone 80. So, the second channel 60 has a cross-section S1 at the inlet 62 and a cross-section S2 < S1 at the inlet of the junction zone 80 at the edge 82 (i.e. at the end of the second channel 60).

In particular, the ramp 72 allows a narrowing of the cross-section of the channel 60 only for the section of channel leading to the final portion 61.

Although the ramp 72 ensures a smooth transition between the cross-sections S1, S2 (without stagnation), it is possible to use a different flow-diverting member, e.g. a stepped structure or a ramp with a concave curved profile.

Preferably the flow-diverting member 70 also has the function of bifurcating the flow of material while it runs through the second channel 60 and before it enters the junction zone 80, therefore before the material bumps against the shutter 12.

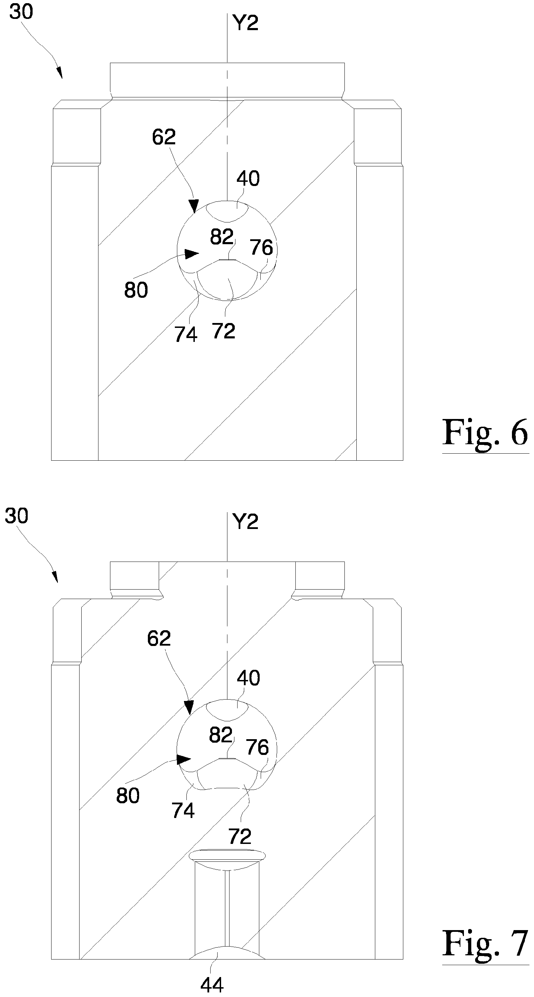

The flow-diverting member 70 is configured to separate the flow of material in the second channel 60 into two diverging flows directed to opposite sides of the shutter 12, respectively. For this purpose, the ramp 72 does not have uniform slope along the transition channel from the cross-section S1 to the cross-section S2, but at its sides the inclined surface of the ramp 72 declines moving radially away from the Y2 axis to form two lateral channels or grooves 74, 76. So the surface of the ramp 72 on which the material flows is composed of a central channel 78 (see fig. 6), nearly flat or almost flat or with the shape of a cusp, and the two lateral channels 74, 76 which are configured as a recess or a concavity of the central channel. The lateral channels 74, 76 determine for the fluid preferential flow channels and preferably are equal to each other and/or symmetrical with respect to the central channel 78.

In this configuration, the lateral channels 74, 76 favour the bypass of the shutter 12 by the flow of material by decreasing/limiting the flow of material bumping frontally against the shutter 12. As a result, the less material hits the shutter 12, the less its speed degrades and more material flows around the sides of the shutter 12. And thus more material arrives at the back of the shutter 12, in front of the curve wall 84, namely in the stagnation zone. Since the speed of the material also increases at the back of the shutter 12 (zone or curve 84), the probability of residue/stagnation forming here decreases.

The passage cross-sections of the material in front of and behind the shutter are preferably equal to each other, but may be different.

The aforementioned fluid-dynamic behaviour may also be obtained by shaping directly the internal cavity of the feed channel 22 as that of the second channel 60, without installing a component 30. For this purpose, one can, for example, make the manifold 20 with SLM technology, or other technology, with which it is possible to create any internal shape. Or the manifold 20 may be formed of two sandwich-like superimposed plates, wherein one half of the channel 22 is made by removing material from the surface of one plate and the second half by removing material from the surface of the second plate.

## Claims

1. Method for conveying a flow of melt material into an injection molding apparatus from an outlet of a feed channel to an inlet of an injection channel, wherein
the inlet and outlet are joined to each other by an elbow-shaped joining channel, the injection channel leads to an injection nozzle for injection towards a mold cavity, a nozzle shutter crosses the joining channel in front of said outlet and coaxially crosses the injection channel,
with the step of
diverting the flow of material, while it passes through the feed channel and before it arrives in the joining channel, in a direction opposite or contrary to the inlet of the injection channel
so as to push at least a fraction of the material entering the joining channel towards a target area of the joining channel located behind the shutter.

2. Method according to claim 1, wherein the flow is diverted at or near the outlet or exit of the feed channel into the joining channel.

3. Method according to claim 1 or 2, wherein the flow is diverted by reducing the cross-section of the feed channel.

4. Method according to claim 1 or 2 or 3, wherein the feed channel at the outlet or exit into the joining channel has a cross-section composed of
a first terminal portion, adjacent to the inlet of the injection channel, and
a second terminal portion, diametrically opposite to the first terminal portion and farther from the inlet of the injection channel,
wherein said step of diverting takes place by progressively tapering or narrowing said cross-section only for the section leading to the first terminal portion, leaving the cross-section of the feed channel constant for the section leading to the second terminal portion.

5. Method according to any preceding claim, wherein, while the material travels through the feed channel and before it enters the joining channel, two diverging flows are created in the flow of the material directed respectively towards opposite sides of the shutter which are located inside the joining channel.

6. Component of a melt-material injection molding apparatus, the apparatus comprising
- a feed channel for the molten material,
- an injection channel, equipped with an inlet for melt material and configured to lead the melt material to an injection nozzle for injection towards a mold cavity,
- a nozzle shutter mounted to coaxially cross the injection channel,
the component comprising:
- a joining channel with elbow-shaped development, equipped with a joining inlet and a joining outlet,
- a pass-through cavity which is fluidically communicating with the joining channel and adapted to translatably accommodate the shutter,
wherein the component is mounted in such a way that the joining inlet joins with the feed channel to receive molten material and the joining outlet joins with the inlet of the injection channel to convey molten material there,
- means or a member for diverting a flow of material, which has entered the component from the joining inlet, in a direction opposite or contrary to the joining outlet, so as to push at least a fraction of the material entering the joining channel towards a target area of the joining channel located behind the shutter.

7. Component according to claim 6, wherein the joining channel comprises, with respect to the flow direction of the material, an initial section which
- extends from the joining inlet towards the inside of the component,
- is configured to linearly convey the material along a central longitudinal axis of the initial section, and
- connects by means of an elbow-curved section;
said means or member being placed at or near the initial section.

8. Component according to claim 7, wherein said means or element comprises or consists of a reduction of the cross-section of the initial section towards the inside of the component.

9. Component according to claim 8, wherein an internal wall of the initial section comprises an inclined plane or ramp tilted with respect to the central longitudinal axis, wherein the inclined plane or ramp develops
to narrow the cross-section of the initial section as the initial section develops inside the component so as to divert the flow of material towards an opposite curved wall of the joining channel.

10. Component according to claim 7 or 8 or 9, wherein
the initial section in correspondence with the connection with the joining section has a cross-section composed of
a first final portion, adjacent to the inlet of the injection channel, and
a second final portion, diametrically opposite to the first final portion and farther from the inlet of the injection channel;
wherein said means or member comprises or consists of a reduction of the cross-section of the initial section only for the section leading to the first final portion, the cross-section of the joining channel remaining constant for the section leading to the second final portion.
